# EUROPÄISCHE PATENTSCHRIFT

(11) **EP 1 095 069 B1**
(45) Veröffentlichungstag und Bekanntmachung des Hinweises auf die Patenterteilung: **25.08.2004**
(21) Anmeldenummer: 99929189.1
(22) Anmeldetag: 12.06.1999
(51) Int. Cl.: C08F 10/00

(54) **VERFAHREN ZUR HERSTELLUNG EINES GETRÄGERTEN KATALYSATORSYSTEMS**
METHOD FOR PRODUCING A SUPPORTED CATALYST SYSTEM
PROCEDE PERMETTANT DE PREPARER UN SYSTEME DE CATALYSEUR SUPPORTE

(30) Priorität: 25.06.1998 DE 19828271
(43) Veröffentlichungstag der Anmeldung: 02.05.2001
(73) Patentinhaber: Basell Polyolefine GmbH, 50389 Wesseling (DE)
(72) Erfinder: KRISTEN, Marc, Oliver, D-67117 Limburgerhof (DE); GREGORIUS, Heike, D-56288 Bubach (DE); RIEF, Ursula, D-68542 Heddesheim (DE)
(74) Vertreter: Meyer, Thomas Hans
(86) Internationale Anmeldenummer: PCT/EP1999/004054
(87) Internationale Veröffentlichungsnummer: WO 1999/067302

(56) Entgegenhaltungen:
- EP-A- 0 619 326
- EP-A- 0 781 783
- WO-A-95/13871
- DE-A- 19 606 167
- DE-A- 19 757 540

## Beschreibung

Die vorliegende Erfindung betrifft ein Verfahren zur Herstellung eines geträgerten Katalysators, welches die folgenden Verfahrensschritte umfaßt:
A) Umsetzung eines anorganischen Trägermaterials mit einer Metallverbindung der allgemeinen Formel I

   M¹(R¹)ᵣ(R²)ₛ(R³)ₜ(R⁴)ᵤ I

   in der
   - M¹: ein Alkali-, ein Erdalkalimetall oder ein Metall der III. oder IV. Hauptgruppe des Periodensystems bedeutet,
   - R¹: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
   - R² bis R⁴: Wasserstoff, Halogen, C₁- bis C₁₀-Alkyl, C₆- bis C₁₅-Aryl, Alkylaryl, Arylalkyl, Alkoxy oder Dialkylamino mit jeweils 1 bis 10 C-Atomen im Alkylrest und 6 bis 20 C-Atomen im Arylrest,
   - r: eine ganze Zahl von 1 bis 4
   und
   - s, t und u: ganze Zahlen von 0 bis 3 bedeuten, wobei die Summe r+s+t+u der Wertigkeit von M¹ entspricht,
B) Umsetzung des nach A) erhaltenen Materials mit einem Metallocenkomplex und einer metalloceniumionenbildenden Verbindung
   und
C) anschließender Umsetzung mit einer Metallverbindung der allgemeinen Formel II

   M²(R⁵)ₒ(R⁶)ₚ(R⁷)_{q} II

   in der
   - M²: ein Alkali-, ein Erdalkalimetall oder ein Metall der III. Hauptgruppe des Periodensystems bedeutet,
   - R⁵: Wasserstoff, C₁- bis C₁₀ -Alkyl, C₆- bis C₁₅-Aryl, Alkyl-aryl oder Arylalkyl mit jeweils 1 bis 10 C-Atomen im Alkylrest und 6 bis 20 C-Atomen im Arylrest,
   - R⁶ und R⁷: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
   - o: eine ganze Zahl von 1 bis 3
   und
   - p und q: ganze Zahlen von 0 bis 2 bedeuten, wobei die Summe o+p+q der Wertigkeit von M² entspricht.

Weiterhin betrifft die Erfindung ein geträgertes Katalysatorsystem, welches nach dem erfindungsgemäßen Verfahren erhältlich ist sowie die Verwendung dieses Katalysatorsystems zur Homopolymerisation von Ethylen oder Propylen oder Copolymerisation von Ethylen oder Propylen mit C₃- bis C₁₀-α-Olefinen sowie zur Gasphasenpolymerisation von Olefinen.

Besonders für die Gasphasenpolymerisation und die Suspensionspolymerisation von Ethylen und höheren α-Olefinen werden vorzugsweise geträgerte Katalysatorsysteme eingesetzt. Insbesondere durch geträgerte Metallocenkatalysatoren werden dabei Polymerprodukte mit außergewöhnlichen Materialeigenschaften erhalten.

Viele Metallocenkomplexe bedürfen, um ihre volle katalytische Aktivität zu entfalten, einer Aktivierung. Als geeignete Aktivatorverbindung werden meist Alumoxane (s. z.B. EP-B1-035 242) oder Verbindungen eingesetzt, welche das Metallocen in ein Metalloceniumkation überführen und durch ein geeignetes nichtkoordinierendes Gegenion diese koordinativ ungesättigte kationische Struktur stabilisieren (s. z.B. EP-A·277 004).

Die Produktivität dieser Katalysatorsysteme und damit ihre wirtschaftliche Einsatzfähigkeit hängt wesentlich von der Art des Trägermaterials und insbesondere vom Trägerungsverfahren ab. Ein sehr effizientes Verfahren zur Trägerung insbesondere kationisch aktivierbarer Metallocenkatalysatorsysteme wird in DE-A 19 606 167 beschrieben.

Zur Steigerung der Produktivität kationisch aktivierter Metallocenkatalysatoren wurden solchen Katalysatorsystemen schwach koordinierende Lewisbasen zugegeben (s. EP-B1-0648 786 und EP-A1-0 771 822). Diese Katalysatorsysteme sind jedoch meist homogene, ungeträgerte Katalysatorsysteme. Die Lewisbase wird stets in einem mindestens 10fachen molaren Überschuß relativ zum Metallocenkomplex, in der Regel im 50 bis 250fachen Überschuß eingesetzt. In EP-A-0 771 822 wird zwar erwähnt, daß der Metallocenkomplex auch auf einen Träger aufgebracht werden kann, die Lewisbase wird jedoch stets in löslicher Form und in erheblichem Überschuß dem Polymerisationsgemisch zugegeben.

Da die zugesetzten Lewisbasen in höheren Konzentrationen jedoch einen inhibierenden Effekt auf die Metallocenkatalysatoren ausüben und außerdem eine unerwünschte extrahierbare Komponente im Polymerisat darstellen, wäre eine Verringerung der Lewisbasenkonzentration bei Beibehaltung des positiven Effekts dieser Verbindungen auf die Katalysatorproduktivität wünschenswert.

Der vorliegenden Erfindung lag nun die Aufgabe zugrunde ein Verfahren zur Herstellung eines geträgerten Metallocenkatalysatorsystems zu finden, welches die Nachteile des Standes der Technik nicht mehr aufweist und eine hohe Produktivität bei geringen Mengen zugesetzter Lewisbasen zeigt.

Demgemäß wurde das eingangs beschriebene Verfahren zur Herstellung eines geträgerten Katalysators gefunden, welches dadurch gekennzeichnet ist, daß man die Vorstufe des auf diese weise erhaltenen geträgerten Katalysators mit einer Lewisbase in einer Menge von 0,3 bis weniger als 2 mol pro mol Metallocenkomplex in Kontakt bringt.

Weiterhin wurde ein geträgertes Katalysatorsystem, welches nach diesem Verfahren erhältlich ist, gefunden sowie die Verwendung dieses geträgerten Katalysatorsystems bei der Homo- und Copolymerisation von Olefinen.

Die erfindungsgemäßen geträgerten Katalysatorsysteme sind dadurch erhältlich, daß in einer ersten Stufe A) ein anorganisches Trägermaterial mit einer Metallverbindung der allgemeinen Formel I umgesetzt wird.

Als Trägermaterialien werden vorzugsweise feinteilige Feststoffe eingesetzt, deren Teilchendurchmesser im Bereich von 1 bis 200 µm liegen, insbesondere 30 bis 70 µm.

Geeignete Trägermaterialien sind beispielsweise Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace. Diese Trägermaterialien könhnen zur Entfernung des adsorbierten Wassers einer thermischen Behandlung unterzogen werden oder auch calciniert werden, wobei bevorzugt eine Behandlung bei 80-200°C, vorzugsweise bei 100-150°C durchgeführt wird.

Andere anorganische Verbindungen wie Al₂O₃ oder MgCl₂ oder diese Verbindungen enthaltende Mischungen können ebenfalls als Trägermaterialien eingesetzt werden.

Von den Metallverbindungen der allgemeinen Formel I sind diejenigen bevorzugt, bei denen M¹ für ein Metall der III. Hauptgruppe des Periodensystems steht, insbesondere für Aluminium, R¹ für C₁bis C₁₀-Alkyl und R² bis R⁴ für C₁- bis C₁₀-Alkyl. Für den besonders bevorzugten Fall, daß M¹ für Aluminium steht, ist u Null und die Reste R¹ bis R³ weisen insbesondere die gleiche Bedeutung auf, vorzugsweise Methyl, Ethyl, iso-Butyl oder Hexyl, bevorzugt iso-Butyl.

Vorzugsweise wird die Metallverbindung der allgemeinen Formel I als Lösung zu einer Suspension des Trägers gegeben. Als Lösungs- bzw. Suspensionsmittel sind insbesondere Kohlenwasserstoffe wie Heptan geeignet. Die Menge an Metallverbindung I kann in weiten Grenzen variieren, die Mindestmenge richtet sich nach der Anzahl der Hydroxygruppen des Trägers. Die Temperaturen, Reaktionszeiten und Drücke sind an sich unkritisch, bevorzugt sind Temperaturen von 0 bis 80°C und Reaktionszeiten von 0,1 bis 48 Stunden.

Es hat sich als geeignet erwiesen, nach der Trägervorbehandlung die überschüssige Metallverbindung I durch Auswaschen, beispielsweise mit Kohlenwasserstoffen wie Pentan oder Hexan, zu entfernen und den Träger zu trocknen.

Das so hergestellte Material ist bis zu 6 Monaten lagerbar und nicht pyrophor.

Dieses Material wird nun in einer weiteren Stufe B) mit einem Metallocenkomplex und einer metalloceniumionenbildenden Verbindung umgesetzt.

Als Metallocenkomplexe eignen sich beispielsweise folgende Verbindungen der allgemeinen Formel III: 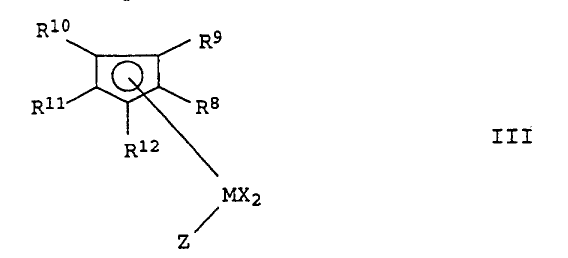 in der die Substituenten folgende Bedeutung haben:
- M: Titan, Zirkonium, Hafnium, Vanadium, Niob oder Tantal,
- X: Fluor, Chlor, Brom, Iod, Wasserstoff oder C₁-C₁₀-Alkyl, vorzugsweise Chlor,
- R⁸ bis R¹²: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Aryl-alkyl, wobei gegebenenfalls auch zwei benachbarte Reste gemeinsam für 4 bis 15 C-Atome aufweisende cyclische Gruppen stehen können oder Si(R¹³)₃ mit
- R¹³: C₁- bis C₁₀-Alkyl, C₃- bis C₁₀-Cycloalkyl oder C₆- bis C₁₅-Aryl,
- Z: für X oder 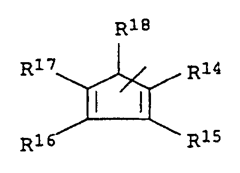 steht,
wobei die Reste
- R¹⁴ bis R¹⁸: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende cyclische Gruppen stehen können, oder Si(R¹⁹)₃ mit
- R¹⁹: C₁- bis C₁₀-Alkyl, C₆- bis C₁₅-Aryl oder C₃- bis C₁₀-Cycloalkyl,
oder wobei die Reste R¹¹ und Z gemeinsam eine Gruppierung -R²⁰-A-bilden, in der
- R²⁰: 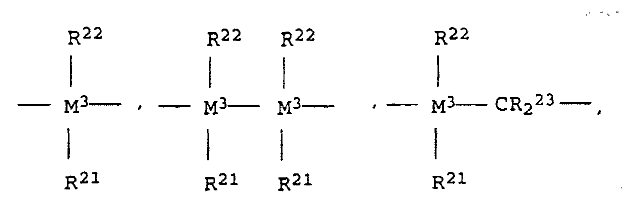 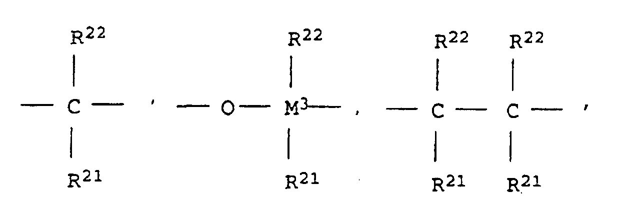 = BR²², = AlR²², -Ge-, -Sn-, -O-, -S-, = SO, = SO₂, = NR²², = CO, = PR²² oder = P(O)R²² ist,
wobei
- R²¹, R²² und R²³: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M³: Silicium, Germanium oder Zinn ist,
- A: ―O―, ―S―, 〉NR²⁴ oder 〉PR²⁴ bedeuten, mit
- R²⁴: C₁- bis C₁₀-Alkyl, C₆- bis C₁₅-Aryl, C₃- bis C₁₀-Cycloalkyl, Alkylaryl oder Si (R²⁵)₃,
- R²⁵: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R¹¹ und R¹⁷ gemeinsam eine Gruppierung -R²⁰bilden.

Von den Metallocenkomplexen der allgemeinen Formel III sind 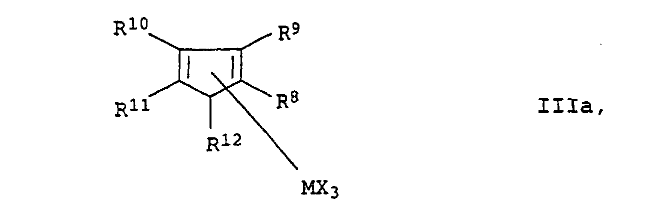 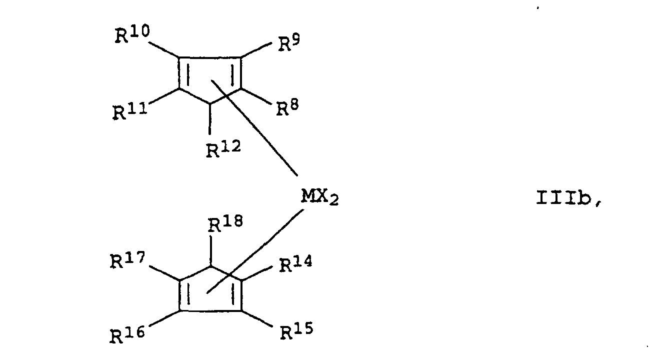 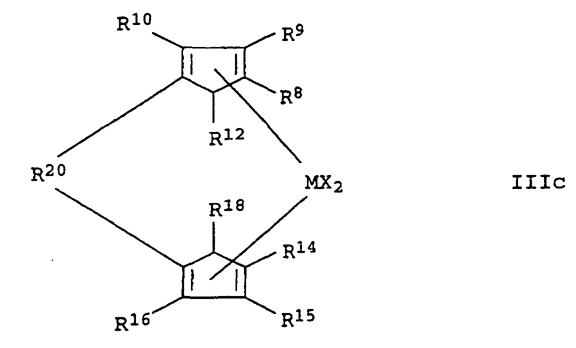 und 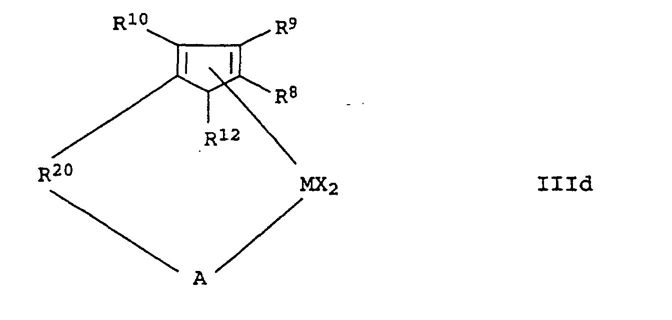 bevorzugt.

Die Reste X können gleich oder verschieden sein, bevorzugt sind sie gleich.

Von den Verbindungen der Formel IIIa sind insbesondere diejenigen bevorzugt, in denen
- M: Titan, Zirkonium oder Hafnium, insbesondere Zirkonium,
- X: Chlor und
- R⁸ bis R¹²: Wasserstoff oder C₁- bis C₄-Alkyl bedeuten.

Von den Verbindungen der Formel IIIb sind als bevorzugt diejenigen zu nennen, bei denen
- M: für Titan, Zirkonium oder Hafnium, insbesondere für Zirkonium steht,
- X: für Chlor,
- R⁸ bis R¹²: Wasserstoff, C₁- bis C₄-Alkyl oder Si(R¹³)₃,
- R¹⁴ bis R¹⁸: Wasserstoff, C₁- bis C₄-Alkyl oder Si(R¹⁹)₃ bedeuten.

Insbesondere sind die Verbindungen der Formel IIIb geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid.

Von den Verbindungen der Formel IIIc sind diejenigen besonders geeignet, in denen
- R⁸ und R¹⁴: gleich sind und für Wasserstoff oder C₁- bis C₁₀-Alkylgruppen stehen,
- R¹² und R¹⁸: gleich sind und für Wasserstoff, eine Methyl-, Ethyl-, iso-Propyl- oder tert.-Butylgruppe stehen
- R⁹, R¹⁰, R¹⁵ und R¹⁶: die Bedeutung
R¹⁰ und R¹⁶ C₁- bis C₄-Alkyl
R⁹ und R¹⁵ Wasserstoff
haben oder zwei benachbarte Reste R⁹ und R¹⁰ sowie R¹⁵ und R¹⁶ gemeinsam für 4 bis 12 C-Atome aufweisende cyclische Gruppen stehen,
- R²⁰: für 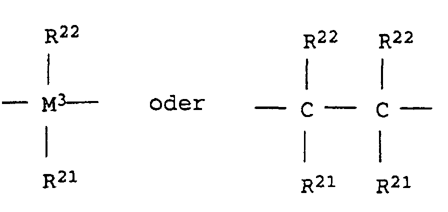 steht,
- M: für Titan, Zirkonium oder Hafnium und
- X: für Chlor stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-methylindenyl)-zirkoniumdichlorid,
Dimethylsilandiylbis(-2-methylbenzindenyl)-zirkoniumdichlorid und
Dimethylsilandiylbis(-2-methylindenyl)-hafniumdichlorid.

Bei den Verbindungen der allgemeinen Formel IIId sind als besonders geeignet diejenigen zu nennen, in denen
- M: für Titan oder Zirkonium,
- X: für Chlor stehen,
- R²⁰: für 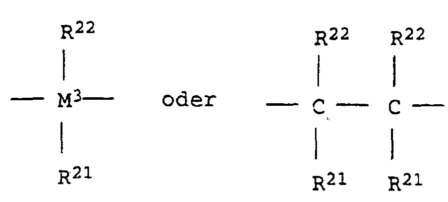 steht,
- A: für ―O― , ―S―, 〉NR²⁴
und
- R⁸ bis R¹⁰ und R¹²: für Wasserstoff, C₁- bis C₁₀-Alkyl, C₃- bis C₁₀-Cycloalkyl, C₆- bis C₁₅-Aryl oder Si(R¹⁴)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Geeignete metalloceniumionenbildende Verbindungen sind insbesondere starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel IV

M⁴X¹X²X³ IV

bevorzugt, in der
- M⁴: ein Element der III. Hauptgruppe des Periodensystems bedeutet, insbesondere B, Al oder Ga, vorzugsweise B,
- X¹, X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel IV, in der X¹, X² und X³ gleich sind, vorzugsweise Tris(pentafluorphenyl)boran.

Als ionische Verbindungen mit lewissauren Kationen sind Verbindungen der allgemeinen Formel V

[(Y^{a+})Q₁Q₂...Q_{z}]^{d+} V

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Besonders bevorzugt ist der Einsatz aromatischer Borverbindungen als metalloceniumionenbildende Verbindungen, insbesondere wird Dimethylanilinium-tetra(pentafluorphenyl)-borat eingesetzt.

Die Menge an metalloceniumionenbildenden Verbindungen beträgt bevorzugt 0,1 bis 10 Äquivalente, bezogen auf den Metallocenkomplex III.

Die Bedingungen für die Umsetzung des Metallocenkomplexes mit der metalloceniumionenbildenden Verbindung sind an sich unkritisch, bevorzugt arbeitet man in Lösung, wobei als Lösungsmittel insbesondere Kohlenwasserstoffe, vorzugsweise aromatische Kohlenwasserstoffe wie Toluol, geeignet sind.

Hierzu wird nun das nach A) hergestellte Material gegeben. Eine Menge von 0,1 bis 10 Gew.-% an Metallocenkomplex, bezogen auf das anorganische Trägermaterial ist besonders geeignet. Die Bedingungen für diese Umsetzung sind ebenfalls nicht kritisch, Temperaturen im Bereich von 20 bis 80°C und Reaktionszeiten im Bereich von 0,1 bis 20 Stunden haben sich als besonders geeignet erwiesen.

Das nach B) erhaltene Material kann nun isoliert werden und ist bis zu mindestens 6 Monaten lagerbar.

In einer weiteren Stufe C) wird das nach B) erhaltene Material mit einer Metallverbindung der allgemeinen Formel II umgesetzt. Sofern der Metallocenkomplex in seiner Metalldihalogenidform eingesetzt wurde, dient diese Stufe vor allem der Aktivierung des Metallocenkomplexes. Auch bei bereits in der aktiven Form eingesetzten Metallocenkatalysatoren ist jedoch der Kontakt mit einer Metallverbindung II zur Erzielung optimaler Aktivität erforderlich. Die Aktivierung kann zu einem beliebigen Zeitpunkt, d.h. vor, bei oder nach der Dosierung des nach B) erhaltenen Materials in den Reaktor, erfolgen. Vorzugsweise erfolgt die Aktivierung nach der Dosierung des nach B) erhaltenen Materials in den Reaktor.

Von den Metallverbindungen der allgemeinen Formel II

M²(R⁵)ₒ(R⁶)ₚ(R⁷)_{q} II

in der
- M²: ein Alkali-, ein Erdalkalimetall oder ein Metall der III. Hauptgruppe des Periodensystems, d.h. Bor, Aluminium, Gallium, Indium oder Thallium bedeutet,
- R⁵: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
- R⁶ und R⁷: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
- o: eine ganze Zahl von 1 bis 3
und
- p und q: ganze Zahlen von 0 bis 2 bedeuten, wobei die Summe o+p+q der Wertigkeit von M² entspricht,
sind diejenigen Verbindungen bevorzugt, in denen
- M²: Lithium, Magnesium oder Aluminium bedeutet und
- R⁵ bis R⁷: für C₁- bis C₁₀-Alkyl stehen.

Besonders bevorzugte Metallverbindungen der allgemeinen Formel II sind n-Butyl-Lithium, n-Butyl-n-octyl-Magnesium, n-Butyl-n-heptyl-Magnesium, Tri-iso-butylaluminium, Triethylaluminium und Trin-hexyl-aluminium.

Die Bedingungen für die Umsetzung in Stufe C) sind an sich unkritisch. Temperaturen, Reaktionszeiten und Drücke richten sich nach dem Zeitpunkt der Umsetzung, d.h. Aktivierung.

Das erfindungsgemäße Verfahren zeichnet sich nun dadurch aus, daß man die Vorstufe des geträgerten Katalysators mit einer Lewisbase in geringer Menge in Kontakt bringt. Die Zugabe dieser Lewisbase erfolgt vorteilhafterweise zu einem möglichst frühen Zeitpunkt der Katalysatorherstellung. In einer vorteilhaften Ausführungsform des Verfahrens bringt man die gemäß Schritt A) behandelte Katalysatorvorstufe mit der Lewisbase in Kontakt, d.h. die Lewisbase wird mit dem Katalysatorträger, der bereits mit der Metallverbindung der allgemeinen Formel I vorbehandelt ist, in Kontakt gebracht, und zwar bevor diese Katalysatorvorstufe mit dem Metallocenkomplex beladen wird. Auf diese Weise kommt es quasi zu einer Trägerung der Lewisbase, die Schutzwirkung der Lewisbase auf den Metallocenkomplex beginnt also unmittelbar mit der Trägerung dieses Metallocenkomplexes.

Besonders vorteilhaft ist ein Verfahren, bei dem ein Metallocenkomplex in seiner Metalldihalogenidform eingesetzt wird. Für diesen Fall ist es besonders vorteilhaft, die Lewisbase vor der Aktivierung des Metallocendihalogenids gemäß Schritt C) mit der Vorstufe des geträgerten Katalysators in Kontakt bringt.

Die Art der Zugabe der Lewisbase zu der Vorstufe des geträgerten Katalysators ist im Prinzip unkritisch. Im allgemeinen wird die Lewisbase in einem organischen Lösungsmittel wie beispielsweise Toluol gelöst und in dieser Weise mit dem Trägermaterial in Kontakt gebracht.

Durch den frühen Zeitpunkt der Zugabe der Lewisbase zu der Vorstufe des geträgerten Katalysators wird eine Anreicherung der Lewisbase auf der Trägeroberfläche erreicht und es wird dadurch möglich, die Menge der Lewisbase erheblich zu reduzieren. Das Verfahrens sieht vor, daß man die Lewisbase in einer Menge von 0,3 bis weniger als 2 mol pro mol Metallocenkomplex einsetzt. Bevorzugt ist ein Verhältnis von Lewisbase zum Metallocenkomplex von 0,5 bis 1,5 mol pro mol.

Als Lewisbasen kommen Verbindungen verschiedener Substanzklassen in Betracht, die folgende Eigenschaften aufweisen sollten:
Sie sollten in der Lage sein das Metallzentrum des Metallocenkomplexes schwach zu koordinieren, und zwar in einer Weise, daß sie durch die zu polymerisierenden Olefine aus diesen Koordinationskomplex verdrängt werden können. Vorteilhafte Verbindungen, die sich zum Einsatz in dem erfindungsgemäßen Verfahren eignen, sind z.B. aromatische Amine, Alkylarylphenole sowie sterisch gehinderte Ether und Amine. Von den aromatischen Aminen sind besonders tertiäre Amine bevorzugt, also beispielsweise C₁- bis C₄-Dialkylanilin, insbesondere Dimethylanilin. Die aromatischen Ringe dieser Amine können durch verschiedene Elektronen-schiebende oder Elektron-ziehende Substituenten substituiert werden, um auf diese Weise die Nucleophilie und damit die Koordinationsstärke der Verbindungen zu variieren. Das gleiche gilt auch für Alkylarylphenole. Die Alkylarylphenole enthalten üblicherweise Alkylgruppen mit einem bis zehn C-Atomen und können am aromatischen Ring ebenfalls substituiert sein. Als Substituenten haben sich besonders Elektron-ziehende Substituenten wie Fluoratome als vorteilhaft erwiesen. Eine besonders vorteilhaft einsetzbare Lewisbase ist beispielsweise Pentafluoranisol. Als sterisch gehinderte Ether und Amine sind z.B. 2,6-Di-t-butylanilin, 2,2,5,5-Tetramethyltetrahydrofuran oder 2,5-Di-t-butylfuran zu nennen.

Das nach dem neuen Verfahren erhältliche geträgerte Katalysatorsystem weist gegenüber ähnlichen bekannten Katalysatorsystemen eine höhere Produktivität auf, ohne eine erhebliche Menge extrahierbarer Substanzen in das Polymerisat einzuführen. Das neue geträgerte Katalysatorsystem eignet sich besonders zur Verwendung bei der Homopolymerisation von Ethylen oder Propylen oder bei der Copolymerisation von Ethylen oder Propylen mit C₃- bis C₁₀-α-Olefinen. Als C₃- bis C₁₀-α-Olefine kommen alle gebräuchlichen α-Olefine wie sie als Comonomere bei der Copolymerisation mit Ethylen oder Propylen benutzt werden in Betracht. Besonders zu nennen sind Buten, Hexen und Octen. Aber auch Cycloolefine und höhere Alk-1-ene sowie generell Alkene lassen sich als Monomere zur Homo- oder Copolymerisation einsetzen.

Das erfindungsgemäße geträgerte Katalysatorsystem läßt sich in verschiedenen Polymerisationsverfahren, besonders bei Suspensions- und Gasphasenverfahren einsetzen. Besonders vorteilhaft ist die Verwendung des erfindungsgemäßen geträgerten Katalysatorsystems bei der Gasphasenpolymerisation von Olefinen. Solche Gasphasenpolymerisationsverfahren sind dem Fachmann bekannt. Die Polymerisation kann beispielsweise in einer gerührten Gasphase, besonders bevorzugt jedoch in einer Gasphasenwirbelschicht erfolgen.

### Beispiele

### Beispiele 1 - 4:

6 g Kieselgel (ES 70 X, Hersteller Crosfield) wurden für 6 h bei 130°C ausgeheizt und dann in einer toluolischen Lösung von Triisobutylaluminium (8,5 ml 2 M Lösung) suspendiert. Nach 2 h wurde das Trägermaterial abfiltriert und dann in 50 ml Toluol suspendiert. In kurzen Abständen wurden 242 mg Dimethylanilinium-tetrakis-pentafluorphenylborat, 3 ml einer 0,1 molaren Lösung (0,3 mmol) von N,N-Dimethylanilin in Toluol und 121 mg bis-(n-Butyl-cyclopentadienyl)-zirkondichlorid (0,3 mmol) zu der Suspension gegeben. Das Reaktionsgemisch wurde unter Rühren für 30 min auf 80°C erwärmt. Das Lösungsmittel wurde anschließend im Vakuum entfernt. Man erhielt den Katalysator als gut rieselndes Pulver. Analog zu dieser Herstellvorschrift wurden Katalysatoren mit den folgenden Verhältnissen von Zr, B und Dimethylanilin hergestellt:

| | Zr | B | Dimethylanilin |
|---|---|---|---|
| Beispiel 1 | 1 | 1 | 1 |
| Beispiel 2 | 1 | 1 | 0,5 |
| Beispiel 3 | 1 | 1 | 3 |
| Vergleichsbeispiel | 1 | 1 | 0 |

### Polymerisation von Ethylen

In einem gerührten 10-1-Stahlautoklav wurden nach sorgfältigem Spülen mit Stickstoff und Temperieren auf die Polymerisationstemperatur von 70°C 4,5 l iso-Butan und 150 mg Butyl-Octyl-Magnesium (2 molare Lösung in Heptan) vorgelegt. Dann wurde der geträgerte Katalysator mit weiteren 0,5 l iso-Butan eingespült und Ethylen auf einen Gesamtdruck von 38 bar aufgepreßt. Der Druck in Autoklaven wurde durch Nachdosierung von Ethylen konstant gehalten. Nach 90 min wurde die Polymerisation durch Entspannen des Autoklaven abgebrochen. Das Polymerisat fiel in Form eines gut rieselfähigen Grießes an.

| Katalysator gemäß | Produktivität (g Polymer/g Katalysator) |
|---|---|
| Beispiel 1 | 5100 |
| Beispiel 2 | 2800 |
| Beispiel 3 | 600 |
| Vergleichsbeispiel | 2400 |

Die Beispiele zeigen, daß schon sehr geringe Mengen der Lewisbase zu einer optimalen Steigerung der Produktivität führen.

## Patentansprüche

1. Verfahren zur Herstellung eines geträgerten Katalysators, welches die folgenden Verfahrensschritte umfaßt:
A) Umsetzung eines anorganischen Trägermaterials mit einer Metallverbindung der allgemeinen Formel I
M¹(R¹)ᵣ(R²)ₛ(R³)ₜ(R⁴)ᵤ I
in der
M¹ ein Alkali-, ein Erdalkalimetall oder ein Metall der III. oder IV. Hauptgruppe des Periodensystems bedeutet,
R¹ Wasserstoff, C₁-bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
R² bis R⁴ Wasserstoff, Halogen, C₁- bis C₁₀-Alkyl, C₆- bis C₁₅-Aryl, Alkylaryl, Arylalkyl, Alkoxy oder Dialkylamino mit jeweils 1 bis 10 C-Atomen im Alkylrest und 6 bis 20 C-Atomen im Arylrest,
r eine ganze Zahl von 1 bis 4
und
s, t und u ganze Zahlen von 0 bis 3 bedeuten, wobei die Summe r+s+t+u der Wertigkeit von M¹ entspricht,
B) Umsetzung des nach A) erhaltenen Materials mit einem Metallocenkomplex und einer metalloceniumionenbildenden Verbindung und
C) anschließender Umsetzung mit einer Metallverbindung der allgemeinen Formel II
M²(R⁵)ₒ(R⁶)ₚ(R⁷)_{q} II
in der
M² ein Alkali-, ein Erdalkalimetall oder ein Metall der III. Hauptgruppe des Periodensystems bedeutet,
R⁵ Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
R⁶ und R⁷ Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
o eine ganze Zahl von 1 bis 3
und
p und q ganze Zahlen von 0 bis 2 bedeuten, wobei die Summe o+p+q der Wertigkeit von M² entspricht,
und welches **dadurch gekennzeichnet ist, daß** man eine Vorstufe des auf diese Weise erhaltenen geträgerten Katalysators mit einer Lewisbase in einer Menge von 0,3 bis weniger als 2 mol pro mol Metallocenkomplexe in Kontakt bringt.

2. Verfahren nach Anspruch 1, **dadurch gekennzeichnet, daß** man die gemäß Schritt A) behandelte Katalysatorvorstufe mit der Lewisbase in Kontakt bringt.

3. Verfahren nach Anspruch 1, **dadurch gekennzeichnet, daß** man einen Metallocenkomplex in seiner Metalldihalogenid-Form einsetzt und die Lewisbase mit dem geträgerten Katalysator oder seiner Vorstufe vor der Umsetzung gemäß Schritt C) in Kontakt bringt.

4. Verfahren nach den Ansprüchen 1 bis 3, **dadurch gekennzeichnet, daß** man eine Lewisbase, ausgewählt aus der Gruppe der aromatischen Amine, der Alkylarylphenole und der sterisch gehinderten Ether und Amine, einsetzt.

5. Verfahren nach den Ansprüchen 1 bis 4, **dadurch gekennzeichnet, daß** man als Lewisbase Dimethylanilin einsetzt.

6. Verfahren nach den Ansprüchen 1 bis 5, **dadurch gekennzeichnet, daß** als metalloceniumionenbildende Verbindung eine aromatische Borverbindung eingesetzt wird.

7. Geträgertes Katalysatorsystem erhältlich nach den Ansprüchen 1 bis 6.

8. Verwendung des geträgerten Katalysatorsystems gemäß Anspruch 7 bei der Homopolymerisation von Ethylen oder Propylen oder bei der Copolymerisation von Ethylen oder Propylen mit C₃- bis C₁₀-α-Olefinen.

9. Verwendung des geträgerten Katalysatorsystems gemäß Anspruch 7 bei der Gasphasenpolymerisation von Olefinen.

## Claims

1. A process for preparing a supported catalyst, which comprises the following steps:
A) reacting an inorganic support material with a metal compound of the formula I
M¹(R¹)ᵣ(R²)ₛ(R³)ₜ(R⁴)ᵤ I
where
M¹ is an alkali metal, an alkaline earth metal or a metal of main group III or IV of the Periodic Table,
R¹ is hydrogen, C₁-C₁₀-alkyl, C₆-C₁₅-aryl, alkylaryl or arylalkyl each having from 1 to 10 carbon atoms in the alkyl radical and from 6 to 20 carbon atoms in the aryl radical,
R² to R⁴ are hydrogen, halogen, C₁-C₁₀-alkyl, C₆-C₁₅-aryl, alkylaryl, arylalkyl, alkoxy or dialkylamino each having from 1 to 10 carbon atoms in the alkyl radical and from 6 to 20 carbon atoms in the aryl radical,
r is an integer from 1 to 4
and
s, t and u are integers from 0 to 3, where the sum r+s+t+u corresponds to the valence of M¹,
B) reacting the material obtained as described in A) with a metallocene complex and a compound capable of forming metallocenium ions and
C) subsequently reacting the resulting material with a metal compound of the formula II
M²(R⁵)ₒ(R⁶)ₚ(R⁷)_{q} II
where
M² is an alkali metal, an alkaline earth metal or a metal of main group III of the Periodic Table,
R⁵ is hydrogen, C₁-C₁₀-alkyl, C₆-C₁₅-aryl, alkylaryl or arylalkyl each having from 1 to 10 carbon atoms in the alkyl radical and from 6 to 20 carbon atoms in the aryl radical,
R⁶ and R⁷ are hydrogen, halogen, C₁-C₁₀-alkyl, C₆-C₁₅-aryl, alkylaryl, arylalkyl or alkoxy each having from 1 to 10 carbon atoms in the alkyl radical and from 6 to 20 carbon atoms in the aryl radical,
o is an integer from 1 to 3
and
p and q are integers from 0 to 2, where the sum o+p+q corresponds to the valence of M²,
a which is **characterized in that** a precursor of the supported catalyst obtained in this way is brought into contact with a Lewis base in an amount of from 0.3 to < 2 mole per mole of metallocene complex.

2. A process as claimed in claim 1, **characterized in that** the catalyst precursor treated as described in step A) is brought into contact with the Lewis base.

3. A process as claimed in claim 1, **characterized in that** a metallocene complex in its metal dihalide form is used and the Lewis base is brought into contact with the supported catalyst or its precursor prior to the reaction of step C).

4. A process as claimed in any of claims 1 to 3, **characterized in that** a Lewis base selected from the group consisting of aromatic amines, alkylarylphenols and sterically hindered ethers and amines is used.

5. A process as claimed in any of claims 1 to 4, **characterized in that** the Lewis base used is dimethylaniline.

6. A process as claimed in any of claims 1 to 5, **characterized in that** the compound capable of forming metallocenium ions is an aromatic boron compound.

7. A supported catalyst system obtainable as claimed in any of claims 1 to 6.

8. The use of a supported catalyst system as claimed in claim 7 in the homopolymerization of ethylene or propylene or in the copolymerization of ethylene or propylene with C₃-C₁₀-α-olefins.

9. The use of a supported catalyst system as claimed in claim 7 in the gas-phase polymerization of olefins.

## Revendications

1. Procédé pour la préparation d'un catalyseur sur support, comprenant les stades opératoires suivants :
A) réaction d'une matière de support minérale avec un dérivé métallique de formule générale 1
M¹(R¹)ᵣ(R¹)ₛ(R³)ₜ(R⁴)ᵤ (I)
dans laquelle
M¹ représente un métal alcalin, un métal alcalino-terreux ou un métal du groupe principal III ou IV de la Classification périodique,
R¹ représente l'hydrogène, un groupe alkyle en C1-C10, aryle en C6-C15, alkylaryle ou arylalkyle contenant chacun 1 à 10 atomes de carbone dans la partie alkyle et 6 à 20 atomes de carbone dans la partie aryle,
R² à R⁴ représentent l'hydrogène, des halogènes, des groupes alkyle en C1-C10, aryle en C6-C15, alkylaryle, arylalkyle, alcoxy ou dialkylamino contenant 1 à 10 atomes de carbone dans les groupes alkyle et 6 à 20 atomes de carbone dans les groupes aryle,
r est un nombre entier allant de 1 à 4, et
s, t et u sont des nombres entiers allant de 0 à 3, la somme r+s+t+u correspondant à la valence de M¹,
B) réaction du produit obtenu en A) avec un complexe de métallocène et un composé formant des ions métallocénium et
C) réaction consécutive avec un dérivé métallique de formule générale II
M²(R⁵)ₒ(R⁶)ₚ(R⁷)_{q} II
dans laquelle
M² représente un métal alcalin, un métal alcalino-terreux ou un métal du groupe principal III de la Classification périodique,
R⁵ représente l'hydrogène, un groupe alkyle en C1-C10, aryle en C6-C15, alkylaryle ou arylalkyle contenant chacun 1 à 10 atomes de carbone dans la partie alkyle et 6 à 20 atomes de carbone dans la partie aryle,
R⁶ et R⁷ représentent l'hydrogène, des halogènes, des groupes alkyle en C1-C10, aryle en C6-C15, alkylaryle, arylalkyle ou alcoxy contenant chacun 1 à 10 atomes de carbone dans la partie alkyle et 6 à 20 atomes de carbone dans la partie aryle,
o est un nombre entier allant de 1 à 3, et
p et q sont des nombres entiers allant de 0 à 2, la somme o+p+q correspondant à la valence de M²,
et qui se **caractérise en ce que** l'on met en contact un produit intermédiaire du catalyseur sur support ainsi obtenu avec une base de Lewis en quantité allant de 0,3 à moins de 2 mol par mol du complexe de métallocène.

2. Procédé selon la revendication 1, **caractérisé en ce que** l'on met en contact avec la base de Lewis le produit intermédiaire de préparation du catalyseur traité au stade A).

3. Procédé selon la revendication 1, **caractérisé en ce que** l'on met en oeuvre un complexe de métallocène sous sa forme dihalogénure métallique et on met en contact la base de Lewis avec le catalyseur sur support ou son produit intermédiaire avant la réaction du stade C).

4. Procédé selon les revendications 1 à 3, **caractérisé en ce que** l'on utilise une base de Lewis choisie dans le groupe des amines aromatiques, des alkylarylphénols et des éthers et amines objets d'un empêchement stérique.

5. Procédé selon les revendications 1 à 4, **caractérisé en ce que** la base de Lewis utilisée est la diméthylaniline.

6. Procédé selon les revendications 1 à 5, **caractérisé en ce que** le composé formant des ions métallocénium est un dérivé aromatique du bore.

7. Système catalyseur sur support obtenu selon les revendications 1 à 6.

8. Utilisation du système catalyseur sur support obtenu selon la revendication 7 pour l'homopolymérisation de l'éthylène ou du propylène ou la copolymérisation de l'éthylène ou du propylène avec des α-oléfines en C3-C10.

9. Utilisation du système catalyseur sur support selon la revendication 7 pour la polymérisation d'oléfines en phase gazeuse.
